# EUROPEAN PATENT SPECIFICATION

(11) **EP 1 852 477 B1**
(45) Date of publication and mention of the grant of the patent: **13.11.2013**
(21) Application number: 06713108.6
(22) Date of filing: 06.02.2006
(51) Int. Cl.: C09D 11/00, B41J 2/01, B41M 5/00

(54) **INK SET FOR INKJET RECORDING AND IMAGE FORMING METHOD BY USE THEREOF**
TINTENKOMBINATION FÜR DIE TINTENSTRAHLAUFZEICHNUNG SOWIE DAVON GEBRAUCHMACHENDES BEBILDERUNGSVERFAHREN
ENSEMBLE D ENCRES POUR JET D ENCRE, PROCEDE DE FORMATION D IMAGE PAR UTILISATION DE CET ENSEMBLE D ENCRES

(30) Priority: 21.02.2005 JP 2005043890
(43) Date of publication of application: 07.11.2007
(73) Proprietor: Konica Minolta Medical & Graphic, Inc., Hino-shi, Tokyo 191-8511 (JP)
(72) Inventor: KONDO, Ai, kawa-machi, Hachioji-shi, Tokyo, 1928505 (JP)
(74) Representative: Roberts, Mark Peter
(86) International application number: PCT/JP2006/301965
(87) International publication number: WO 2006/087930

(56) References cited:
- EP-A- 1 614 730
- EP-A- 1 784 462
- EP-A- 1 803 781
- JP-A- 2003 292 837
- JP-A- 2004 244 498
- US-B1- 6 344 819

## Description

The present invention relates to a set of inks used for ink jet recording, and an image forming method and an ink jet recording device by use thereof.

Ink jet recording systems can form images simply at low cost and are noted as a technique capable of performing high image quality recording adaptable to various printing fields, along with recent enhancement of image quality.

Printing methods by use of a white ink and a color ink to form a reflection image on a transparent recording medium (substrate), include so-called Surface printing in which a white background is formed on a transparent substrate using a white ink and further thereon, a color image is formed using color inks of yellow, magenta, cyan, black or the like, and the formed final image is viewed from the printed face; and so-called backing printing in which a color image is formed on a transparent substrate using color inks and further thereon, a white is superimposed, and the final formed image is observed through the transparent substrate.

Such image formation by using a white ink and color inks is also feasible in ink jet recording systems. A white ink used for ink jet recording exhibits superior visibility for a transparent recording medium or a recording medium having a relatively low lightness. Specifically, its use in combination with color inks can obtain clear color images similarly to recording on a white medium, which is one of effective methods.

In ink jet recording methods which form images by dots, a color ink needs to maintain a dot size fitted to the resolving power on a substrate to form precise images. Specifically when printed on the substrate such as plastic film exhibiting no ink absorptivity, an ink with an excessively low surface tension expands too far to obtain a desired dot size, resulting in lowered image density or contamination with other inks before drying, and rendering it difficult to obtain a clear image.

Inkjet inks which can be bonded onto a recording medium such as plastic film or metals having no ink-absorptivity to perform printing, include an ultraviolet curing ink composition containing a coloring agent (colorant), an ultraviolet curing agent, a photopolymerization initiator and the like. For instance, there were proposed ultraviolet-curable white ink-jet inks in which a white pigment of titanium oxide was employed as a colorant (as disclosed in patent documents 1-3). However, such white inks were not supposed to be used in combination with color inks. Nothing was taught therein with respect to optimum combinations to obtain full-color images with enhanced visibility by using a white ink with color inks.
Patent document 1: JP-A No. 62-64874,
Patent document 2: JP-A No.2000-336295
Patent document 3: JP-A No. 2001-207098 (hereinafter, the term, JP-A refers to Japanese Patent Application publication)

The present invention has come into being in light of the foregoing circumstances. Thus, it is an object of the invention to provide a set of ink-jet inks to form images exhibiting superior visibility and high definition even onto a non-ink-absorbing transparent recording medium or a recording medium of a relatively low lightness, and an image forming method and an ink jet recorder by use thereof.

The invention is defined in the claims.

The present invention provides a set of ink-jet inks to form images exhibiting superior visibility and high definition even onto a non-ink-absorbing transparent recording medium or a recording medium of a relatively low lightness, and an image forming method and an ink jet recorder by use thereof.

The invention will now be described, by way of example, with reference to the accompanying drawings, in which:
FIG. 1 illustrates constitution of a main part of an ink jet recording device.
FIG. 2 illustrates another example of constitution of a main part of an ink jet recording device.

### EXPLANATION OF NUMERALS

- 1:: Recording apparatus
- 2:: Head carriage
- 3:: Ink-jet recording head
- 4:: Exposure means
- 31:: Ink ejection portion
- P:: Recording medium

### PREFERRED EMBODIMENTS OF THE INVENTION

As a result of extensive study by the inventor of this application, it was proved that a set of ink-jet inks to form images exhibiting superior visibility and high definition even onto a non-ink-absorbing transparent recording medium or a recording medium of a relatively low lightness, and an image forming method and an ink jet recording apparatus by use thereof were realized by an ink set for ink jet recording comprising one or more color inks and a white ink, characterized in that each of the color inks and the white ink contains a colorant and a surface tension of the white ink is lower than that of the color inks, and an image forming method and an ink jet recording apparatus by use thereof.

In general, high definition is not needed when a white ink is used for the white background. In surface printing, a white ink is desired to be rapidly expanded on the transparent substrate to form a uniform film so that color inks are suitably printed. In backing printing, white ink needs to uniformly cover color images formed on the film substrate.

It was proved that an ink-jet ink set of color inks containing colorants (for example, yellow, magenta, cyan and black colorants) and a white ink containing a colorant (for example, white pigments), in which the surface tension of the white ink is lower than that of the color ink, whereby images exhibiting superior visibility and high definition can be obtain even on a non-ink-absorbing transparent recording medium.

The use of an actinic ray-curable (or hardenable) ink, as used in the invention enables to remove the drying stage. Accordingly, a high density image area of a relatively high ink dot density can be formed on a highly ink-absorptive recording medium. Inks are cured immediately after deposited, forming a sharp and highly precise image on a fibrous coarse recording medium, without causing bleeding of the image.

Such an actinic ray-curable ink is preferably a cationic curable ink in terms of curability, safety and compatibility with a recording medium.

There will be described component elements used for an ink set for ink-jet recording (hereinafter, also denoted as an ink set), ink components and image forming methods.

### Surface Tension of Ink

The ink set for ink jet recording comprising one or more color inks and a white ink is characterized in that each of the color inks and the white ink contains a colorant and a surface tension of the white ink is lower than that of the color inks, the surface tension of the white ink is preferably 0.5 to 10.0 mN/m lower than that of a color ink exhibiting a lowest surface tension of the color inks, and the surface tension of the white ink is more preferably lower by 0.5 to 3.0 mN/m than that of a color ink exhibiting a lowest surface tension of the color inks. The surface tension of ink, as defined in this invention is determined as a value (mN/m) of static surface tension at a temperature of 25 °C in a platinum plate method, using a surface tensiometer (e.g., CBVP-Z, produced by Kyowa Kaimen Kagaku).

In the image forming method of the invention, when an ink of an ink set elected from an ink-jet recording head onto a recording medium to deposit the ink onto a recording medium to perform printing and the deposited ink is subjected to exposure to an actinic ray, the white ink which was subjected to exposure to an actinic ray preferably exhibits a surface tension of 30 to 60 mN/m. The surface tension of a cured ink exposed to an actinic ray can be determined as a solid surface tension (also called critical surface tension). Solid surface tension can be determined in a manner such that contact angles are measured with respect to water, methylene iodide and nitromethane on the cured ink image surface and the solid surface tension is calculated according to the equation defined in Journal of Nippon Secchaku Gakkai, vol. 8, 131 (1972).

Means for achieving the surface tension of an ink before being ejected and the surface tension of an ink cured by an actinic ray, as defined in this invention are not specifically limited. Such surface tensions can be attained by optimum adjustment of the kind and the addition amount of surfactants, the kind and the addition amount of pigment-dispersing agents, the kind and the addition amount of polymerizable constituents, and the kind and the addition amount of polymerization initiators.

There will be described surfactants usable as a means for adjusting the foregoing surface tension, as below.

Surfactants usable in this invention are not specifically limited and include anionic surfactants such as dialkylsulfosuccinates, alkylnaphthalenesulfonates and carboxylates; nonionic surfactants such as polyoxyethylene alkyl ethers, polyoxyethylene alkylaryl ethers, acetylene glycols, and polyoxyethylene/polyoxypropylene block copolymers; and cationic surfactants such as alkylamine salts and quaternary ammonium salts; and silicone oil.

Specifically, silicone oil is preferred in this invention. Examples of silicone oil include amino-modified silicone oil, epoxy-modified silicone oil, carboxy-modified silicone oil, polyether-modified silicone oil, , polyether-modified silicone oil in which a polyether group is introduced into a part of methyl groups contained dimethyl polysiloxane, alkyl-modified silicone oil, alkoxy-modified silicone oil, fluorine-modified silicone oil, methylstyrene-modified silicone oil, olefin-modified silicone oil, and alcohol-modified silicone oil.

Color inks and white inks used in this invention are white inks are adjusted preferably to a surface tension of 10 to 60 mN/m. Specifically, the surface tension color inks and white inks are adjusted to 20 to 40 mN/m and 15 to 35 mN/m, respectively.

In the ink-jet ink set of this invention, physical properties of inks needs to be adjusted so that the surface tension of the white ink is lower than that of color inks. A white ink exhibiting a surface tension higher than the color inks renders it difficult to achieve smoothness, causing unevenness of the image and leading to deteriorated image quality.

When the hardened film of a white ink which has been cured upon exposure to actinic rays exhibits a surface tension of 30 to 60 mN/m, color ink images can be formed even on the white ink, similarly to those obtained on the recording medium.

### Color Ink

The ink-jet ink set of this invention is comprised of at least one color ink and a white ink. In this invention, the color ink refers to an ink of a color, except for white. Thus, the color ink(s) are at least one color ink of yellow, magenta, cyan and black inks, and preferably four color inks of yellow, magenta, cyan and black. Further, light color inks having a relatively low colorant content, such as light yellow, light magenta and light cyan inks and special color inks of red, blue, green, orange, violet and the like, metallic luster inks of gold, silver and the like are also usable in accordance with the use or image quality.

### Colorant

Various colorants of pigments or dyes, which are soluble or dispersible in the main component of other ink constituents are usable as a colorant contained in the foregoing color inks but pigments are preferred in terms of weather resistance. Achromatic inorganic pigments such as carbon black, titanium oxide and calcium carbonate, and chromatic organic pigments are usable as a pigment contained in the inks of this invention.

Examples of an organic pigment include insoluble azo pigments such as Toluidine Red, Toluidine Maroon, Hanza Yellow, Benzidine Yellow, and Pyrazolone Red; soluble azo pigments such as Lithode, Helio Bordeaux, Pigment Scarlet and Permanent Red 2B; derivatives of vat dyes such as Alizarine, indanthrone and thioindigo; phthalocyanine type organic pigments such as Phthalocyanine Blue, and Phthalocyanine Green; quinacridone type organic pigments such as Quinacridone Red and Quinacridone Magenta; perylene type organic pigments such as Perylene Red and Perylene Scarlet; isoindolinone type organic pigments such as Isoindolinone Yellow and Isoindolinoe Orange; pyranthrone type organic pigments such as Pyranthrone Red and Pyranthrone Orange; thioindigo type organic pigments; condensed azo type organic pigments; benzimidazolone type organic pigments; quinophthalone type organic pigments such as Quinophthalone Yellow; isoindoline type organic pigments such as Isoindoline Yellow; and other pigments such as Flavanthrone Yellow, Acylamide Yellow, Nickel Azo Yellow, Copper Azomethine Yellow, Perynone Orange, Anthrone Orange, Dianthraquinonyl Red and Dioxazine Violet.

Examples of organic pigments designated as C.I. No. include C.I. Pigment Yellow 12, 13,14,17, 20, 24, 74, 83, 86, 93, 109, 110, 117, 120, 125, 128, 137, 138, 139, 147, 148, 150, 151, 153, 154, 155, 166, 168, 180, 185; C.I. Pigment Orange 16, 36, 43, 51, 55, 59, 61+ C.I. Pigment Red 9, 48, 49, 52, 53, 57, 97, 122, 123, 147, 149, 168, 177, 180, 192, 202, 206, 215, 216, 217, 220, 223, 224, 226, 227, 228, 238, 240; C.I. Pigment Violet 19, 23, 29, 30, 37, 40, 50; C.I. Pigment Blue 15, 15:1, 15:3, 15:4, 15:6, 22, 60, 64; C.I. Pigment Green 7, 36; C.I. Pigment Brown 23, 25, 26; C.I. Pigment Black 7, 26 and 28.

Besides the foregoing pigments, newly synthesized pigments are also usable in this invention. The pigments may be subjected to a surface treatment. Examples of a surface treatment include a treatment using coupling agents such as alcohols, acids, bases and silane compounds, a polymer-grafting treatment and a plasma treatment. A colorant having a relatively low content of organic and inorganic impurities is preferred in this invention. Generally, commercially available colorants have a relatively high impurity content, so that the use of purified ones is desirable.

Of these pigments, quinacridone type organic pigments, phthalocyanine type organic pigments, benzimidazolone type organic pigments, isoindolinone type organic pigments, condensed azo type organic pigments, quinophthalone type organic pigments, and isoindolinone type organic pigments are preferred in terms of superior light fastness.

A fine-particulate organic pigment having an average particle size of 10 to 200 nm is preferred, which can be determined by laser scattering. A pigment having an average particle size of 10 nm is difficult to produce a high density, due to the reduced particle size, leading to deteriorated light fastness. An average particle size exceeding 200 nm results difficulty to maintain dispersion stability, leading to precipitation of the pigment.

A colorant used in the color ink of this invention is contained preferably in an amount of 0.1% to 30% by weight, based on the total ink weight.

### Colorant for White Ink

Inorganic and/or organic white pigments are usable as a colorant for the white ink of this invention. Examples of an inorganic white pigment include alkaline earth metal sulfates such barium sulfate, alkaline earth metal carbonates such as calcium carbonate, silicates such as fine-powdery silicate or synthetic silicates, calcium silicate, alumina, alumina hydride, titanium oxide, zinc oxide, talc and clay. Of these, titanium oxide is preferred in terms of covering power and coloring power. Examples of an organic white pigment include organic compound salts described in JP-A No. 11-129613 and alkylene bismelamine derivatives described in JP-A Nos. 11-140365 and 2001-234093. Commercially available white pigments include Shigenox FWG, Shigenox OWPL, Shigenox FWP, Shigenox FWG, Shigenox UL and Shigenox U (which are trade names and produced by Hakkoru Chemical Co.).

### Titanium Oxide

In the ink set for ink-jet recording, of the invention, a white ink preferably contains titanium oxide as a colorant. Titanium oxide includes three crystalline forms of anatase type, rutile type and blue kite type but is classified into an anatase type and rutile type as general purposes. The anatase type has a relatively low density and is easily ground into fine particles, while the rutile type has a relatively high refractive index, exhibiting a high covering power. Either one of these is usable in this invention. It is preferred to make the most possible use of characteristics and to make selections according to the use thereof. The use of the anatase type having a low density and a small particle size can achieve superior dispersion stability, ink storage stability and ejectability. At least two different crystalline forms may be used in combination. The combined use of the anatase type and the rutile type which exhibits a high coloring power can reduce the total amount of titanium oxide, leading to improved storage stability and ejection performance of ink.

Surface treatments for titanium oxide include an aqueous treatment and a gas phase treatment. Alumina/silica treatment is generally conducted but a non-treatment, an alumina treatment or a silica treatment may also be employed.

The average particle size of titanium oxide is preferably from 50 to 500 nm (more preferably 100 to 300 nm). An average particle size of less than 50 nm does not provide sufficient covering power. An average particle size of more than 500 nm tends to result in deterioration of ink storage stability and ejection performance. Titanium oxide is incorporated preferably in an amount of 3% to 50% by weight of the ink composition, and more preferably 5% to 20%. An amount of less than 3% by weight cannot achieve sufficient covering power and an amount of more than 50% by weight tends to result in deteriorated ink storage stability and ejection property.

Colorants can be dispersed, for example, using a ball mill, a sand mill, an atreiter, a roll mill, an agitator, Henschel mixer, a colloid mill, a ultrasonic homogenizer, a pearl mill, a wet jet mill or a paint shaker. Dispersing agents may be used to perform dispersion of colorants, in which solvents or polymeric compounds are employed as a dispersing medium.

### Dispersing Agent

Dispersing agents can be used to disperse colorants. Enhanced dispersibility of a colorant in the ink composition leads to improvements in kneading during ink preparation and storage stability or ejection property of the prepared ink. Dispersing agents also have a function of adjusting surface tension of an ink.

Examples of a dispersing agent include, a hydroxy-containing carboxylic acid ester, a salt of long chain polyaminoamide, and high molecular weight acid ester, a high molecular weight polycarboxylic acid salt, a high molecular weight unsaturated acid ester, a copolymer, a modified polyurethane, a modified polyacrylate, a polyether ester type anionic surfactant, naphthalenesulfonic acid formalin condensate salt, an aromatic sulfonic acid formalin condensate salt, a polyoxyethylene alkylphosphoric acid ester, polyoxyethylene nonylphenyl ether, stearylamine acetate and pigment derivatives.

A high molecular weight copolymer or a high molecular weight polyester acid amide amine-salt can be used as a dispersing agent for dispersion of titanium oxide, whereby enhanced dispersion stability, ink storage stability and ejection property can be achieved.

A dispersing agent is incorporated preferably in an amount of 0.1% to 30% by weight, and more preferably 5% to 20% by weight.

### Ink Property

In another embodiment of this invention, the ink is a curable one containing a polymerizable compound and a photoinitiator. Various curable inks are feasible but a cation type curable ink is preferred in terms of curability, safety and adaptability to the substrate.

These curable inks may contain a colorant, a polymerizable compound and a photoinitiator, and optionally a polymerization inhibitor, a surfactant, a resin and a solvent.

Various commonly known ink compositions are usable as a cation type curable ink, as disclosed, for example, in JP-A Nos. 6-9714, 2001-31892, 2001-40068, 2001-55507, 2001-310938, 2001-310937, 2001-220526, 2003-183551, 2004-59627, 2005-41893 and 2005-290246. Radical-type curable inks include ink compositions described in JP-A No. 7-159983, JP-B No. 7-31399 (hereinafter, the term, JP-B refers to Japanese Patent Publication), and JP-A Nos. 8-224982 and 10-863.

A radical-cation hybrid type curable ink is also feasible by a combination of a cation type polymerizable compound and a radical type polymerizable compound.

Curable ink composition exhibiting a viscosity of 7 to 50 mPa·s, which exhibits stable ejection under any curing environment (temperature, humidity), is preferred to obtain superior curability. Image Forming Method

There will be described a method of image formation by using a set of curable inks for use in ink-jet recording.

In terms of ejection stability, it is preferred to heat a recording head and the ink at a temperature of 35 to 100 °C, prior to ink ejection. The ink composition exhibits a large variation of viscosity with temperature variation. The viscosity variation greatly affect the droplet size and the droplet-ejecting speed, causing deterioration in image quality, so that it is necessary to maintain the temperature. The control range of ink temperature is preferably within the range of the set temperature ± 5 °C, more preferably the set temperature ± 2 °C, and still more preferably set temperature ± 1 °C.

In the image formation of this invention, exposure to actinic rays is preferably within 0.00 to 2.0 sec. after ink deposition, and more preferably 0.001 to 1.0 sec. It is essential that exposure timing is as early as possible to perform precise image formation.

A basic method of exposure to actinic rays is disclosed in JP-A No. 60-132767. Thus, a light source is provided on both sides of a head unit, and the head and the light source are scanned by a shuttle system. After ink deposition, exposure is conducted after allowed to stand for a given period of time. Further, curing is completed by another light source accompanying no drive. U.S. Patent No. 6,145,979 discloses exposure by using an optical fiber and a method in which a collimated light is shined on a mirror face provided on the side of the head unit to perform exposure of the recording section to UV light. Either of the foregoing exposure means is applicable in this invention.

In one preferred embodiment, exposure to actinic rays is divided into two steps. First, exposure to actinic rays is performed within 0.001 to 2.0 sec. after ink deposition and after completion of each printing, exposure to actinic rays is further conducted. Dividing exposure to actinic rays to two steps renders it possible to inhibit shrinkage of the recording medium during ink-curing.

An actinic ray-curing type ink-jet system conventionally uses a high intensity light source of a total power consumption exceeding 1 kW·hr to inhibit expansion or bleeding of deposited ink dots. However, using such a light source, specifically in printing onto shrink labels, results in excessive shrinkage of the recording medium, which is unacceptable in practice.

In the invention, even when a light source having a power consumption of less than 1 kW·hr is used, precise image formation is feasible and shrinkage of a recording medium can be fallen within acceptable levels in practical use. Examples of such a light source having a power consumption of less than 1 kW·hr include a fluorescent tube, a cold cathode tube and LED but are not limited thereto.

### Ink-jet Recording Device

Hereinafter, there will be described an ink jet recording device with reference to drawings. A recording device of the drawing is an embodiment of an ink jet recording device of the invention. Thus, the ink jet recording device of the invention is not limited to this drawing.

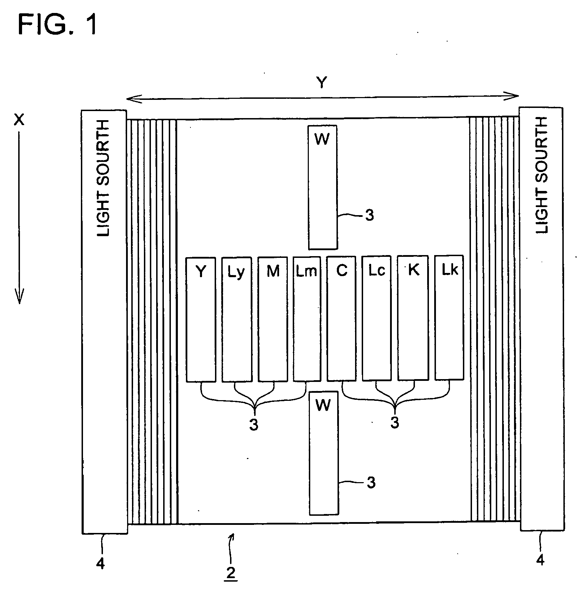

FIG. 1 is an overview of the constitution of main parts of an ink jet recording device of this invention. The recording device is provided with head carriage (2), recording head (3) and actinic ray exposure means (4).

Although a head scanning means is not shown in FIG. 1, scanning of recording head (3) held by head carriage (2) is performed by allowing the head carriage (2) to move back-and-forth in the direction of "Y" shown in FIG. 1.

The head carriage is provided above recording medium P (which is not shown in FIG. 1) and houses plural recording heads (3) according to the number of colors used in image printing on the recording medium (P), with arranging an ejection opening downward. The head carriage (2) is installed in the recording device so as to reciprocate in the Y-direction by driving a head-scanning means of an ink-jet recording head.

In FIG. 1, the recording heads (3) of white (W), yellow (Y), magenta (M), cyan (C), black (K), light yellow (Ly), light magenta (Lm), light cyan (Lc), light black (Lk) and white (W) inks are housed in the head carriage (2), but the number of recording heads (3) housed in the head carriage (2) is optimally decided.

The recording head (3) ejects an actinic ray-curable ink (e.g., UV-curable ink) supplied by an ink supplying means, from an ejection opening toward the recording medium (P) by operating plural ejecting means installed in the interior. The actinic ray-curable ink ejected from the recording head (3) is composed of a colorant, a polymerizable monomer, an initiator and the like. The initiator functions as a catalyst upon exposure to an actinic ray, e.g., ultraviolet ray, causing the monomer to be cured or polymerize to harden the ink.

The recording head (3) ejects droplets of an actinic ray curable ink toward a given region (where ink is to be deposited) of recording medium (P) and causes the droplets to be deposited onto the region in the course of scanning in which the recording head (3) moves from one end of the recording medium (P) to the other end in the direction designated as Y, by driving a head scanning means. Then, the recording medium (P) is allowed to slightly move downwardly in the direction designated as X (sub-scanning direction). The foregoing operation is repeated to perform image formation.

A white ink is ejected only from recording heads at the top of the sub-scanning direction, thereby performing "front print" image formation. On the contrary, ejection of a white ink is performed only from recording heads at the end of the sub-scanning direction, thereby forming "back print" images.

The foregoing operation is repeated and an actinic ray-curable ink is ejected from the recording head (3) with working with a head scanning means and a transport means, forming an image composed of aggregates of the ink on the recording medium (P).

Exposing means (4) is composed of a ultraviolet lamp emitting a ultraviolet ray at a specific wavelength in a stable exposure energy and a filter capable of permitting ultraviolet rays at specific wavelengths to pass. Examples of a ultraviolet lamp include a mercury lamp, a metal halide lamp, an eximer laser lamp, a ultraviolet laser, a cold cathode tube, a black light and LED (light emitting diode). Of these, a low pressure mercury lamp emitting a ultraviolet ray at a wavelength of 254 nm, a cold cathode tube and a hot cathode tube and a bactericidal lamp, which can perform efficiently prevention of bleeding and dot size control, are preferred. The use of a black light as a radiation source of the exposing means (4) can cure an actinic ray-curable ink, whereby the exposing means (4) can be prepared at a low price.

The exposing means (4) has a shape identical to the maximum set up by the recording device (actinic ray curing type ink jet printer) or a shape larger than the region capable of being deposited.

The exposing means (4) fixed to both sides of the head carriage (4), substantially in parallel to the recording medium (P). The wavelength of ultraviolet rays emitting from the exposing means (4) can appropriately be varied by changing a ultraviolet lamp or a filter.

The actinic ray-curable ink composition of this invention exhibits superior ejection stability and specifically effective when forming images by using a line head type recording device.

In the image forming method of this invention, the ink-jet recording head is preferably a line head system.

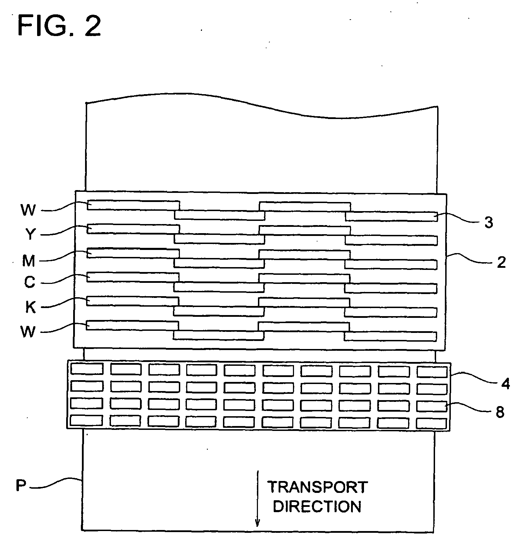

FIG. 2 illustrates another example of constitution of main parts of an ink jet recording device of this invention. The ink jet recording device of FIG. 2 is called a line head system, in which a plurality of recording heads (3) are fixedly arranged in head carriage (2) so as to cover the whole width of recording medium (P).

Further, exposing means (4) is provided in the downward side of the head carriage (2) so as to cover the whole width of the recording medium (P), in which exposure sources (8) of LED exhibiting the maximum illumination intensity at 210-280 nm are arranged so as to cover the overall ink-printing region, for example, being arranged by four in the scanning direction and by ten in the sub-scanning direction.

In this line head system, the head carriage (2) and the exposing means (4) are fixed and only recording medium)P) is transported, and e¥ink ejection and curing are performed to achieve image formation.

In the foregoing image recording device, superior images can be obtained by using color inks and a white ink of this invention. Advantageous effects of this invention can be achieved even in an image recording device differing in constitution.

### EXAMPLES

The present invention will be described based on examples but embodiments of the invention are by no means limited to these.

### Example 1

### Preparation of Ink Set

Ink sets 1 to 7 having the composition shown in Tables 1 to 7 were prepared according to the procedure as below.

A dispersant and each of photopolymerizable compounds shown in Table 1 were added into a stainless steel and placed on a hot plate with heating and stirring at 65 °C for 1 hr. to obtain a solution. Subsequently, colorants 1 to 5 were each added to the obtained solution, then, the solution was placed into a plastic bottle together with 20 g of zirconia beads of a diameter of 1 mm, tightly sealed and subjected to a dispersing treatment for 2 hr.

Subsequently, zirconia beads were removed and further thereto, additives such as a photopolymerization initiator, basic compounds, surfactant and aromatic were added in a combination shown in Table 1 and filtered with a 0.8 µm membrane filter for prevention of plugging to obtain ink set 1.

Ink sets 2 to 7 were similarly prepared, as shown in Tables 2 to 7.

**Table 1**

| Ink Set 1 (Inv.) | | | | | | | | | | | | | |
|---|---|---|---|---|---|---|---|---|---|---|---|---|---|
| Ink | Ink Composition (wt%) | | | | | | | | | | | | |
| | Colorant | | Dispersant | | Polymerizable Compound | | | | Initiator | Basic Compd. | Surfactant | | Aromatic |
| | Kind | Content | D1 | D2 | Epoxy | Oxetane | | | TAS-A | TIPA | KF351 | KF945 | Linalool |
| | | | | | EP-1 | OXT-221 | OXT-212 | OXT-101 | | | | | |
| K | 1 | 2.5 | 1.00 | - | 18.0 | 60.5 | 9.0 | 3.0 | 5.0 | 0.1 | 0.8 | - | 0.1 |
| C | 2 | 2.5 | 1.00 | - | 18.0 | 60.5 | 9.0 | 3.0 | 5.0 | 0.1 | 0.8 | - | 0.1 |
| M | 3 | 4.0 | 1.60 | - | 18.0 | 58.4 | 9.0 | 3.0 | 5.0 | 0.1 | 0.8 | - | 0.1 |
| Y | 4 | 3.0 | 1.20 | - | 18.0 | 59.8 | 9.0 | 3.0 | 5.0 | 0.1 | 0.8 | - | 0.1 |
| W | 5 | 15.0 | - | 1.20 | 18.0 | 47.8 | 9.0 | 3.0 | 5.0 | 0.1 | - | 0.8 | 0.1 |
| Lk | 1 | 0.6 | 0.24 | - | 18.0 | 63.2 | 9.0 | 3.0 | 5.0 | 0.1 | 0.8 | - | 0.1 |
| LC | 2 | 0.6 | 0.24 | - | 18.0 | 63.2 | 9.0 | 3.0 | 5.0 | 0.1 | 0.8 | - | 0.1 |
| Lm | 3 | 1.0 | 0.40 | - | 18.0 | 62.6 | 9.0 | 3.0 | 5.0 | 0.1 | 0.8 | - | 0.1 |
| Ly | 4 | 0.8 | 0.32 | - | 18.0 | 62.9 | 9.0 | 3.0 | 5.0 | 0.1 | 0.8 | - | 0.1 |

**Table 2**

| Ink Set 2 (Inv.) | | | | | | | | | | | | | |
|---|---|---|---|---|---|---|---|---|---|---|---|---|---|
| Ink | Ink Composition (wt%) | | | | | | | | | | | | |
| | Colorant | | Dispersant | | Polymerizable Compound | | | | Initiator | Basic Compd. | Surfactant | | Aromatic |
| | Kind | Content | D1 | D2 | Epoxy | Oxetane | | | TAS-A | TIPA | KF351 | X-22-4272 | Linalool |
| | | | | | EP-1 | OXT-221 | OXT-212 | OXT-101 | | | | | |
| K | 1 | 2.5 | 1.00 | - | 18.0 | 60.5 | 9.0 | 3.0 | 5.0 | 0.1 | 0.8 | - | 0.1 |
| C | 2 | 2.5 | 1.00 | - | 18.0 | 60.5 | 9.0 | 3.0 | 5.0 | 0.1 | 0.8 | - | 0.1 |
| M | 3 | 4.0 | 1.60 | - | 18.0 | 58.4 | 9.0 | 3.0 | 5.0 | 0.1 | 0.8 | - | 0.1 |
| Y | 4 | 3.0 | 1.20 | - | 18.0 | 59.8 | 9.0 | 3.0 | 5.0 | 0.1 | 0.8 | - | 0.1 |
| W | 5 | 15.0 | 1.20 | - | 18.0 | 47.8 | 9.0 | 3.0 | 5.0 | 0.1 | | 0.8 | 0.1 |
| Lk | 1 | 0.6 | 0.24 | - | 18.0 | 63.2 | 9.0 | 3.0 | 5.0 | 0.1 | 0.8 | - | 0.1 |
| Lc | 2 | 0.6 | 0.24 | - | 18.0 | 63.2 | 9.0 | 3.0 | 5.0 | 0.1 | 0.8 | - | 0.1 |
| Lm | 3 | 1.0 | 0.40 | - | 18.0 | 62.6 | 9.0 | 3.0 | 5.0 | 0.1 | 0.8 | - | 0.1 |
| Ly | 4 | 0.8 | 0.32 | - | 18.0 | 62.9 | 9.0 | 3.0 | 5.0 | 0.1 | 0.8 | - | 0.1 |

**Table 3**

| Ink Set 3 (Ref.) | | | | | | | | | | | | | |
|---|---|---|---|---|---|---|---|---|---|---|---|---|---|
| Ink | Ink Composition (wt%) | | | | | | | | | | | | |
| | Colorant | | Dispersant | | Polymerizable Compound | | | | Initiator | Basic Compd. | Surfactant | | Aromatic |
| | Kind | Content | D1 | D2 | Epoxy | Oxetane | | | TAS-A | TIPA | KF351 | SDX-1842 | Linalool |
| | | | | | EP-1 | OXT-221 | OXT-212 | OXT-101 | | | | | |
| K | 1 | 2.5 | 1.00 | - | 18.0 | 60.3 | 9.0 | 3.0 | 5.0 | 0.1 | 1.0 | - | 0.1 |
| C | 2 | 2.5 | 1.00 | - | 18.0 | 60.3 | 9.0 | 3.0 | 5.0 | 0.1 | 1.0 | - | 0.1 |
| M | 3 | 4.0 | 1.60 | - | 18.0 | 58.2 | 9.0 | 3.0 | 5.0 | 0.1 | 1.0 | - | 0.1 |
| Y | 4 | 3.0 | 1.20 | - | 18.0 | 59.6 | 9.0 | 3.0 | 5.0 | 0.1 | 1.0 | - | 0.1 |
| W | 5 | 15.0 | - | 1.20 | 18.0 | 47.6 | 9.0 | 3.0 | 5.0 | 0.1 | - | 1.0 | 0.1 |

**Table 4**

| Ink Set 4 (Ref.) | | | | | | | | | | | | |
|---|---|---|---|---|---|---|---|---|---|---|---|---|
| Ink | Ink Composition (wt%) | | | | | | | | | | | |
| | Colorant | | Dispersant | | Polymerizable Compound | | | | Initiator | Basic Compd. | Surfactant | Aromatic |
| | Kind | Content | D1 | D2 | Epoxy | Oxetane | | | TAS-A | TIPA | SDX-1843 | Linalool |
| | | | | | EP-1 | OXT-221 | OXT-212 | OXT-101 | | | | |
| K | 1 | 2.5 | 1.00 | - | 18.0 | 60.8 | 9.0 | 3.0 | 5.0 | 0.1 | 0.5 | 0.1 |
| C | 2 | 2.5 | 1.00 | - | 18.0 | 60.8 | 9.0 | 3.0 | 5.0 | 0.1 | 0.5 | 0.1 |
| M | 3 | 4.0 | 1.60 | - | 18.0 | 58.7 | 9.0 | 3.0 | 5.0 | 0.1 | 0.5 | 0.1 |
| Y | 4 | 3.0 | 1.20 | - | 18.0 | 60.1 | 9.0 | 3.0 | 5.0 | 0.1 | 0.5 | 0.1 |
| W | 5 | 15.0 | - | 1.20 | 18.0 | 47.1 | 9.0 | 3.0 | 5.0 | 0.1 | 1.5 | 0.1 |

**Table 5**

| Ink Set 5 (Comp.) | | | | | | | | | | | | |
|---|---|---|---|---|---|---|---|---|---|---|---|---|
| Ink | Ink Composition (wt%) | | | | | | | | | | | |
| | Colorant | | Dispersant | | Polymerizable Compound | | | | Initiator | Basic Compd. | Surfactant | Aromatic |
| | Kind | Content | D1 | D2 | Epoxy | Oxetane | | | TAS-A | TIPA | KF351 | Linalool |
| | | | | | EP-1 | OXT-221 | OXT-212 | OXT-101 | | | | |
| K | 1 | 2.5 | 1.00 | - | 18.0 | 60.5 | 9.0 | 3.0 | 5.0 | 0.1 | 0.8 | 0.1 |
| C | 2 | 2.5 | 1.00 | - | 18.0 | 60.5 | 9.0 | 3.0 | 5.0 | 0.1 | 0.8 | 0.1 |
| M | 3 | 4.0 | 1.60 | - | 18.0 | 58.4 | 9.0 | 3.0 | 5.0 | 0.1 | 0.8 | 0.1 |
| Y | 4 | 3.0 | 1.20 | - | 18.0 | 59.8 | 9.0 | 3.0 | 5.0 | 0.1 | 0.8 | 0.1 |
| W | 5 | 15.0 | - | 1.20 | 18.0 | 48.1 | 9.0 | 3.0 | 5.0 | 0.1 | 0.5 | 0.1 |

**Table 6**

| Ink Set 6 (Comp.) | | | | | | | | | | | | | |
|---|---|---|---|---|---|---|---|---|---|---|---|---|---|
| Ink | Ink Composition (wt%) | | | | | | | | | | | | |
| | Colorant | | Dispersant | | Polymerizable Compound | | | | Initiator | Basic Compd. | Surfactant | | Aromatic |
| | Kind | Content | D1 | D2 | Epoxy | Oxetane | | | TAS-A | TIPA | KF351 | X-22-4272 | Linalool |
| | | | | | EP-1 | OXT- 221 | OXT- 212 | OXT- 101 | | | | | |
| K | 1 | 2.5 | 1.00 | - | 18.0 | 60.5 | 9 | 3.0 | 5.0 | 0.1 | - | 0.8 | 0.1 |
| C | 2 | 2.5 | 1.00 | - | 18.0 | 60.5 | 9.0 | 3.0 | 5.0 | 0.1 | - | 0.8 | 0.1 |
| M | 3 | 4.0 | 1.60 | - | 18.0 | 58.4 | 9.0 | 3.0 | 5.0 | 0.1 | - | 0.8 | 0.1 |
| Y | 4 | 3.0 | 1.20 | - | 18.0 | 59.8 | 9.0 | 3.0 | 5.0 | 0.1 | - | 0.8 | 0.1 |
| W | 5 | 15.0 | 1.20 | - | 18.0 | 47.8 | 9.0 | 3.0 | 5.0 | 0.1 | 0.8 | - | 0.1 |
| Lk | 1 | 0.6 | 0.24 | - | 18.0 | 63.2 | 9.0 | 3.0 | 5.0 | 0.1 | - | 0.8 | 0.1 |
| Lc | 2 | 0.6 | 0.24 | - | 18.0 | 63.2 | 9.0 | 3.0 | 5.0 | 0.1 | - | 0.8 | 0.1 |
| Lm | 3 | 1.0 | 0.40 | - | 18.0 | 62.6 | 9.0 | 3.0 | 5.0 | 0.1 | - | 0.8 | 0.1 |
| Ly | 4 | 0.8 | 0.32 | - | 18.0 | 62.9 | 9.0 | 3.0 | 5.0 | 0.1 | - | 0.8 | 0.1 |

**Table 7**

| Ink Set 7 (Comp.) | | | | | | | | | | | | |
|---|---|---|---|---|---|---|---|---|---|---|---|---|
| Ink | Ink Composition (wt%) | | | | | | | | | | | |
| | Colorant | | Dispersant | | Polymerizable Compound | | | | Initiator | Basic Compd. | Surfactant | Aromatic |
| | Kind | Content | D1 | D2 | Epoxy | Oxetane | | | TAS-A | TIPA | SDX-1843 | Linalool |
| | | | | | EP-1 | OXT-221 | OXT-212 | OXT-101 | | | | |
| K | 1 | 2.5 | 1.00 | - | 18.0 | 60.8 | 9.0 | 3.0 | 5.0 | 0.1 | 1.5 | 0.1 |
| C | 2 | 2.5 | 1.00 | - | 18.0 | 60.8 | 9.0 | 3.0 | 5.0 | 0.1 | 1.5 | 0.1 |
| M | 3 | 4.0 | 1.60 | - | 18.0 | 58.7 | 9.0 | 3.0 | 5.0 | 0.1 | 1.5 | 0.1 |
| Y | 4 | 3.0 | 1.20 | - | 18.0 | 60.1 | 9.0 | 3.0 | 5.0 | 0.1 | 1.5 | 0.1 |
| W | 5 | 15.0 | - | 1.20 | 18.0 | 47.1 | 9.0 | 3.0 | 5.0 | 0.1 | 0.5 | 0.1 |

Compounds used for the respective ink sets 1 to 7 shown in Table 1 to 7 are as follows:
K: deep black ink
C: deep cyan ink
M: deep magenta ink
Y: deep yellow ink
W: deep white ink
Lk: light black ink
Lc: light cyan ink
Lm: light magenta ink
Ly: light yellow ink
Colorant 1: C.I. pigment Black 7
Colorant 2: C.I. pigment Blue 15:3
Colorant 3: C.I. pigment Red 122
Colorant 4: C.I. pigment Yellow 120
Colorant 5: C.I. pigment White 6 (anatase type titanium oxide, average particle size 0.16 µm)
D1: pigment dispersant Ajisper PB822 (produced by Ajinomoto Fine Techno Co.)
D2: pigment dispersant Dispalon DA-7300 (produced by Kusumoto Kasei Co.)
EP-1: alicyclic epoxy compound
OXT-221: oxetane compound (produced by TOAGOSEI CO., LTD.)
OXT-212: oxetane compound (produced by TOAGOSEI CO., LTD.)
OXT-101: oxetane compound (produced by TOAGOSEI CO., LTD.)
TAS-A: photopolymerization initiator (as shown below)
TIPA (triisopropanolamine): basic compound
KF351: side-chain polyether-modified silicone oil (produced by Shinetsu Silicone Co., Ltd)
KF945: side-chain polyether-modified silicone oil (produced by Shinetsu Silicone Co., Ltd)
X-22-4272: both end polyether-modified silicone oil (produced by Shinetsu Silicone Co., Ltd)
SDX 1843: dimethylpolysiloxane copolymer (produced by ASAHI DENKA KOGYO K.K.)
SDX 1842: dimethylpolysiloxane copolymer (produced by ASAHI DENKA KOGYO K.K.)
Linalool: aromatic (produced by Takasago Koryo Kogyo)
EP-1: compound shown below.

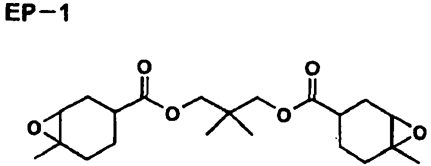

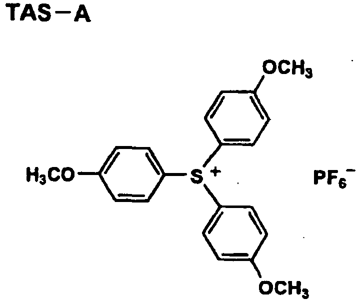

### Performance Evaluation of Ink Set

### Surface Tension of Ink

Surface tension of individual inks of the prepared ink sets were determined as a value (mN/m) of static surface tension at a temperature of 25 °C in a platinum plate method, using a surface tensiometer (e.g., CBVP-Z, produced by Kyowa Kaimen Kagaku).

### Ink Jet Image Output

Image recording on a recording medium (polyethylene terephthalate film) was conducted using a ink jet recording device having a piezo-type ink jet nozzle of 128 nozzle of a nozzle diameter of 23 µm to which each of the ink sets was set.

The ink supply system was comprised of an ink tank, supplying pipe, a pre-room ink tank immediately before a head, a pipeline with a filter, and a piezo head. The portion from the pre-room tank to the head was thermally insulated and heated. Temperature sensors were provided near the pre-room tank and the piezo head and temperature control was performed so that the temperature of the nozzle portion was maintained at 60±2 °C. Droplet was a size of approximately 7 pl and was driven at a driving frequency of 10 kHz so that ejection was performed at a resolution of 720x720 dpi (dpi, no. of dots per inch or 2.54 cm).

Image formation was performed in a full color printer in an arrangement of W (white) head in the upward side of a piezo head carriage, and four color heads of Y, M, C and K (or eight color heads when including Ly, Lm, Lc and Lk) and in that order. A cold cathode tube of 308 nm wavelength (custom-made product, Hibeck Co.) was installed on both ends of the carriage. The Head was allowed to scan and exposure to ultraviolet rays was conducted within 1000 ms after deposition. The illumination intensity on the exposed surface was 15 mW/cm². Exposure energy was adjusted by changing the head carriage speed so that all inks were exposed.

### Image Evaluation

Images outputted by using the ink jet recoding device described above were evaluated as follows.

### Resistance to Bleeding

Adjacent dots of individual colors were observed by a magnifier with respect to bleeding and evaluated with respect to resistance to bleeding, based on the following criteria:
A: adjacent dots kept a circular form, exhibiting no bleeding,
B: adjacent dots were nearly circular, exhibiting substantially no bleeding,
C: adjacent dots slightly deformed, exhibiting slight bleeding but were acceptable level in practice,
D: adjacent dots bled and were mixed, and unacceptable level in practice.

### Color Density Uniformity

A solid image of each individual color was outputted in the above-described ink jet recording device and exposed to ultraviolet rays, then, the images were visually observed with respect to density uniformity and evaluated based on the following criteria:
A: no unevenness in density was observed and superior,
B: slight unevenness in density was observed but no problem in high precise printing,
C: unevenness was observed but acceptable in practice,
D: unevenness was marked and unacceptable in practice.

### Smoothness

A solid image of each individual color was outputted in the above-described ink jet recording device and exposed to ultraviolet rays, then, the images were visually observed with respect to ink layer thickness and its uniformity and evaluated based on the following criteria:
A: ink layer was thin and superior image quality,
B: an image was slightly thick but no unevenness was observed, and it was precise image,
C: an image was thick and slight unevenness was observed, but acceptable in practice,
D: an image was thick and marked unevenness was observed and unacceptable I practice.

### Visibility

A natural color image was outputted in the ink jet recording device and observed whether it was comprehensively high image quality and comfortable. Evaluation was made by ten persons, as follows:
A: 10 persons all recognized superior image quality,
B: 8 or 9 persons recognized superior image quality,
C: 10 persons pointed problems but judged being acceptable in practice,
D: all persons judged being unacceptable in practice. Evaluation results are shown in Table 8.

**Table 8**

| Ink Composition Set No. | Surface Tension (mN/m) | | | | | | | | | Evaluation of Performance | | | | Remark |
|---|---|---|---|---|---|---|---|---|---|---|---|---|---|---|
| | K | C | M | Y | W | Lk | Lc | Lm | Ly | Bleed Resistance | Uniformity | Smoothness | visibility | |
| 1 | 48 | 50 | 51 | 50 | 43 | 49 | 49 | 49 | 49 | A | A | B | A | Inv. |
| 2 | 48 | 51 | 50 | 49 | 40 | 49 | 49 | 49 | 49 | A | A | B | A | Inv. |
| 3 | 41 | 42 | 42 | 41 | 30 | - | - | - | - | B | B | B | B | Ref. |
| 4 | 40 | 39 | 38 | 39 | 25 | - | - | - | - | B | B | B | A | Ref. |
| 5 | 48 | 50 | 50 | 49 | 56 | - | - | - | - | D | D | D | D | Comp. |
| 6 | 40 | 40 | 41 | 40 | 47 | 40 | 41 | 41 | 40 | D | D | D | C | Comp. |
| 7 | 27 | 28 | 28 | 28 | 39 | - | - | - | - | D | D | D | D | Comp. |

As apparent from Table 8, it was proved that the use of ink composition sets 1 to 2 of the invention resulted in superior performance to comparative ink sets.

### Example 2

In the full color image forming device shown in FIG. 2, four color heads of Y, M, C and K (or eight color heads when including Ly, Lm, Lc and Lk) were arranged and ink was outputted from W (white) head in the downward side of the sub-scanning direction X, and four (or eight) color heads in that order. Performance as a so-called backing print image was evaluated similarly to Example 1. Results thereof are shown in Table 9.

**Table 9**

| Ink Set No. | Surface Tension (mN/m) | | | | | | | | | Evaluation of Performance | | | | Remark |
|---|---|---|---|---|---|---|---|---|---|---|---|---|---|---|
| | K | C | M | Y | W | Lk | Lc | Lm | Ly | Bleed Resistance | Uniformity | Smoothness | Visibility | |
| 1 | 48 | 50 | 51 | 50 | 43 | 49 | 49 | 49 | 49 | A | A | A | A | Inv. |
| 2 | 48 | 51 | 50 | 49 | 40 | 49 | 49 | 49 | 49 | A | A | B | A | Inv. |
| 3 | 41 | 42 | 42 | 41 | 30 | - | - | - | - | B | B | B | B | Inv. |
| 4 | 40 | 39 | 38 | 39 | 25 | - | - | - | - | B | B | B | A | Inv. |
| 5 | 48 | 50 | 50 | 49 | 56 | - | - | - | - | D | D | D | D | Comp. |
| 6 | 40 | 40 | 41 | 40 | 47 | 40 | 41 | 41 | 40 | D | D | D | C | Comp. |
| 7 | 27 | 28 | 28 | 28 | 39 | - | - | - | - | D | D | D | D | Comp. |

As apparent from Table 9, it was proved that even in backing print, the use of ink composition sets 1 to 2 resulted in superior performance to comparative ink sets 3 to 7.

## Claims

1. An ink set for ink jet recording, said ink set comprising one or more color inks and a white ink, wherein each of the color inks and the white ink contains a colorant and a surface tension of the white ink is lower than that of the color inks, wherein the color inks comprise a yellow ink, a magenta ink, a cyan ink and a black ink, and the surface tension of the white ink is 0.5 to 10.0 mN/m lower than that of the color ink exhibiting the lowest surface tension of the color inks.

2. An ink set for ink jet recording, said ink set comprising one or more color inks and a white ink, wherein each of the color inks and the white ink contains a colorant, a polymerizable compound and a photopolymerization initiator, and a surface tension of the white ink is lower than that of the color inks, wherein the color inks comprise a yellow ink, a magenta ink, a cyan ink and a black ink, and the surface tension of the white ink is 0.5 to 10.0 mN/m lower than that of the color ink exhibiting the lowest surface tension of the color inks.

3. The ink set as claimed in claim 1 or 2, wherein the surface tension of the white ink is 0.5 to 3.0 mN/m lower than that of the color ink exhibiting the lowest surface tension of the color inks.

4. The ink set as claimed in any one of claims 2 or 3, wherein the polymerizable compound is a cation-polymerizable compound.

5. The ink set as claimed in any one of claims 1 to 4, wherein the white ink contains a colorant of a titanium oxide.

6. The ink set as claimed in claim 5, wherein the titanium oxide has an average particle size of 50 to 500 nm.

7. The ink set as claimed in any one of claims 1 to 6, wherein each of the color inks and the white ink exhibits a surface tension of 10 to 60 mN/m.

8. An image forming method comprising:
ejecting an ink of an ink set from an ink-jet recording head onto a recording medium to deposit the ink onto the recording medium to perform printing and
subjecting the deposited ink to exposure to an actinic ray,
wherein the ink set is one as claimed in any one of claims 2 to 7, and the deposited ink is subjected to exposure to an actinic ray over a period of 0.001 to 1.0 sec.

9. An image forming method comprising:
ejecting an ink of an ink set from an ink-jet recording head onto a recording medium to deposit the ink onto the recording medium to perform printing and
subjecting the deposited ink to exposure to an actinic ray,
wherein the ink set is one as claimed in any one of claims 2 to 7, and the white ink which was subjected to exposure to an actinic ray exhibits a surface tension of 30 to 60 mN/m.

10. An image forming method comprising:
ejecting an ink of an ink set from an ink-jet recording head onto a recording medium to deposit the ink onto the recording medium to perform printing,
wherein the ink set is one as claimed in any one of claims 1 to 7, and the ink is ejected from the recording head of a line head system.

11. An ink-jet recording apparatus for use in an image forming method as claimed in any one of claims 8 to 10, wherein the ink and the recording head are heated at a temperature of 35 to 100 °C and then the ink is ejected from the ink-jet recording head.

## Patentansprüche

1. Tintensatz zur Tintenstrahlaufzeichnung, wobei der Tintensatz eine oder mehrere Farbtinten und eine weiße Tinte umfasst, wobei jede der Farbtinten und der weißen Tinte einen Farbstoff enthält und die Oberflächenspannung der weißen Tinte niedriger als die der Farbtinten ist, wobei die Farbtinten eine gelbe Tinte, eine magentafarbene Tinte, eine cyanfarbene Tinte und eine schwarze Tinte umfassen und die Oberflächenspannung der weißen Tinte um 0,5 - 10,0 mN/m geringer als die der Farbtinte, die die niedrigste Oberflächenspannung der Farbtinten zeigt, ist.

2. Tintensatz zur Tintenstrahlaufzeichnung, wobei der Tintensatz eine oder mehrere Farbtinten und eine weiße Tinte umfasst, wobei jede der Farbtinten und der weißen Tinte einen Farbstoff, eine polymerisierbare Verbindung und einen Photopolymerisationsinitiator enthält und die Oberflächenspannung der weißen Tinte niedriger als die der Farbtinte ist, wobei die Farbtinten eine gelbe Tinte, eine magentafarbene Tinte, eine cyanfarbene Tinte und eine schwarze Tinte umfassen und die Oberflächenspannung der weißen Tinte um 0,5 - 10,0 mN/m geringer als die der Farbtinte, die die niedrigste Oberflächenspannung der Farbtinten zeigt, ist.

3. Tintensatz nach Anspruch 1 oder 2, wobei die Oberflächenspannung der weißen Tinte um 0,5 - 3,0 mN/m geringer als die der Farbtinte, die die niedrigste Oberflächenspannung der Farbtinten zeigt, ist.

4. Tintensatz nach einem der Ansprüche 2 oder 3, wobei die polymerisierbare Verbindung eine kationisch polymerisierbare Verbindung ist.

5. Tintensatz nach einem der Ansprüche 1 bis 4, wobei die weiße Tinte einen Farbstoff aus Titanoxid enthält.

6. Tintensatz nach Anspruch 5, wobei das Titanoxid eine mittlere Teilchengröße von 50 - 500 nm aufweist.

7. Tintensatz nach einem der Ansprüche 1 bis 6, wobei jede der Farbtinten und der weißen Tinte eine Oberflächenspannung von 10 - 60 mN/m zeigt.

8. Bilderzeugungsverfahren, umfassend:
Ausstoßen einer Tinte von einem Tintensatz aus einem Tintenstrahlaufzeichnungskopf auf ein Aufzeichnungsmedium zur Ablagerung der Tinte auf dem Aufzeichnungsmedium zur Durchführung eines Druckens und
Einwirkenlassen von photochemisch wirksamer Strahlung auf die abgelagerte Tinte,
wobei der Tintensatz ein Tintensatz gemäß einem der Ansprüche 2 bis 7 ist und photochemische Strahlung auf die abgelagerte Tinte über einen Zeitraum von 0,001 - 1,0 s einwirken gelassen wird.

9. Bilderzeugungsverfahren, umfassend:
Ausstoßen einer Tinte von einem Tintensatz aus einem Tintenstrahlaufzeichnungskopf auf ein Aufzeichnungsmedium zur Ablagerung der Tinte auf dem Aufzeichnungsmedium zur Durchführung eines Druckens und
Einwirkenlassen von photochemisch wirksamer Strahlung auf die abgelagerte Tinte,
wobei der Tintensatz ein Tintensatz gemäß einem der Ansprüche 2 bis 7 ist und die weiße Tinte, auf die photochemisch wirksame Strahlung einwirken gelassen wurde, eine Oberflächenspannung von 30 - 60 mN/m zeigt.

10. Bilderzeugungsverfahren, umfassend:
Ausstoßen einer Tinte von einem Tintensatz aus einem Tintenstrahlaufzeichnungskopf auf ein Aufzeichnungsmedium zur Ablagerung der Tinte auf dem Aufzeichnungsmedium zur Durchführung eines Druckens,
wobei der Tintensatz ein Tintensatz gemäß einem der Ansprüche 1 bis 7 ist und die Tinte aus dem Aufzeichnungskopf eines Linienkopfsystems ausgestoßen wird.

11. Tintenstrahlaufzeichnungsvorrichtung zur Verwendung bei einem Bilderzeugungsverfahren gemäß einem der Ansprüche 8 bis 10, wobei die Tinte und der Aufzeichnungskopf auf eine Temperatur von 35 - 100 °C erhitzt werden und dann die Tinte aus dem Tintenstrahlaufzeichnungskopf ausgestoßen wird.

## Revendications

1. Ensemble d'encres pour enregistrement par jet d'encre, ledit ensemble d'encres comprenant une ou plusieurs encres de couleur et une encre blanche, dans lequel chacune des encres de couleur et l'encre blanche contiennent un colorant, et une tension superficielle de l'encre blanche est inférieure à celle des encres de couleur, dans lequel les encres de couleur comprennent une encre jaune, une encre magenta, une encre cyan et une encre noire, et la tension superficielle de l'encre blanche est de 0,5 à 10,0 mN/m inférieure à celle de l'encre de couleur qui présente la plus faible tension superficielle des encres de couleur.

2. Ensemble d'encres pour enregistrement par jet d'encre, ledit ensemble d'encres comprenant une ou plusieurs encres de couleur et une encre blanche, dans lequel chacune des encres de couleur et l'encre blanche contiennent un colorant, un composé polymérisable et un initiateur de photopolymérisation, et une tension superficielle de l'encre blanche est inférieure à celle des encres de couleur, dans lequel les encres de couleur comprennent une encre jaune, une encre magenta, une encre cyan et une encre noire, et la tension superficielle de l'encre blanche est de 0,5 à 10,0 mN/m inférieure à celle de l'encre de couleur qui présente la plus faible tension superficielle des encres de couleur.

3. Ensemble d'encres selon la revendication 1 ou 2, dans lequel la tension superficielle de l'encre blanche est de 0,5 à 3,0 mN/m inférieure à celle de l'encre de couleur qui présente la plus faible tension superficielle des encres de couleur.

4. Ensemble d'encres selon l'une quelconque des revendications 2 et 3, dans lequel le composé polymérisable est un composé polymérisable par cations.

5. Ensemble d'encres selon l'une quelconque des revendications 1 à 4, dans lequel l'encre blanche contient un colorant comprenant un oxyde de titane.

6. Ensemble d'encres selon la revendication 5, dans lequel l'oxyde de titane a une taille de particule moyenne de 50 à 500 nm.

7. Ensemble d'encres selon l'une quelconque des revendications 1 à 6, dans lequel chacune des encres de couleur et l'encre blanche présentent une tension superficielle de 10 à 60 mN/m.

8. Procédé de formation d'image comprenant les étapes suivantes :
éjecter une encre d'un ensemble d'encres depuis une tête d'enregistrement par jet d'encre sur un support d'enregistrement pour déposer l'encre sur le support d'enregistrement pour réaliser une impression et
soumettre l'encre déposée à une exposition à un rayon actinique,
dans lequel l'ensemble d'encres est conforme à l'une quelconque des revendications 2 à 7, et l'encre déposée est soumise à une exposition à un rayon actinique sur une période de 0,001 à 1,0 s.

9. Procédé de formation d'image comprenant les étapes suivantes :
éjecter une encre d'un ensemble d'encres depuis une tête d'enregistrement par jet d'encre sur un support d'enregistrement pour déposer l'encre sur le support d'enregistrement pour réaliser une impression et
soumettre l'encre déposée à une exposition à un rayon actinique,
dans lequel l'ensemble d'encres est conforme à l'une quelconque des revendications 2 à 7, et l'encre blanche qui a été soumise à une exposition à un rayon actinique présente une tension superficielle de 30 à 60 mN/m.

10. Procédé de formation d'image comprenant les étapes suivantes :
éjecter une encre d'un ensemble d'encres depuis une tête d'enregistrement par jet d'encre sur un support d'enregistrement pour déposer l'encre sur le support d'enregistrement pour réaliser une impression,
dans lequel l'ensemble d'encres est conforme à l'une quelconque des revendications 1 à 7, et l'encre est éjectée depuis la tête d'enregistrement d'un système à têtes en ligne.

11. Dispositif d'enregistrement par jet d'encre destiné à être utilisé dans un procédé de formation d'image selon l'une quelconque des revendications 8 à 10, dans lequel l'encre et la tête d'enregistrement sont chauffées à une température de 35 à 100 °C, puis l'encre est éjectée de la tête d'enregistrement par jet d'encre.
